Europäisches Patentamt

European Patent Office

Office européen des brevets

(19)

(11) EP 0 622 476 B1

(12) **EUROPÄISCHE PATENTSCHRIFT**

(45) Veröffentlichungstag und Bekanntmachung des Hinweises auf die Patenterteilung:
**22.08.2001 Patentblatt 2001/34**

(51) Int Cl.7: **C23C 24/10**, C23C 26/02, C22F 3/00

(21) Anmeldenummer: **94810169.6**

(22) Anmeldetag: **18.03.1994**

(54) **Metallsubstrate mit laserinduzierter MMC-Beschichtung**

Metal substrates with laser-induced MMC coating

Substrats métalliques avec revêtement MMC induits par laser

(84) Benannte Vertragsstaaten:
**AT CH DE FR GB IT LI**

(30) Priorität: **30.03.1993 CH 96993**

(43) Veröffentlichungstag der Anmeldung:
**02.11.1994 Patentblatt 1994/44**

(73) Patentinhaber: **Alusuisse Technology & Management AG**
**8212 Neuhausen am Rheinfall (CH)**

(72) Erfinder:
• **Liechti, Thomas**
**CH-1680 Romont (CH)**
• **Blank, Eberhard**
**CH-1020 Renens (CH)**

(56) Entgegenhaltungen:
**EP-A- 0 411 322        EP-A- 0 488 944**

• **KEY ENGINEERING MATERIALS Bd. 46,47 , 1990 , CH Seiten 415 - 424 G. RICCIARDI ET AL. 'LASER ASSISTED FORMATION OF A WEAR RESISTANT SiC-METAL COMPOSITE ON THE SURFACE OF A STRUCTURAL ALUMINIUM ALLOY'**
• **MEMOIRES ET ETUDES SCIENTIFIQUES DE LA REVUE DE METALLURGIE Bd. 89, Nr. 11 , November 1992 , PARIS FR Seiten 711 - 723 XP328376 K.MARCELLOU ET AL. 'TRAITEMENT SUPERFICIEL PAR LASER DE L'ALLIAGE D'ALUMINIUM 2024 PAR INJECTION DE POUDRE DE SiC: TUDE MICROSTRUCTURALE ET COMPORTEMENT EN USURE-FROTTEMENT'**

## Beschreibung

Vorliegende Erfindung betrifft einen Werkstoff aus Aluminium oder Aluminiumlegierungen mit einer verschleissfesten und tragenden MMC-Oberflächenschicht enthaltend eine betreffend Si-Anteil übereutektische AlSi-Matrix und SiC-Partikel sowie dessen Verwendung. Die Erfindung betrifft weiter ein Verfahren gemäss dem Oberbegriff von Anspruch 5 und dessen Verwendung.

MMC steht dabei für die englische Abkürzung von Metal Matrix Composite und bedeutet soviel wie Metall-Matrix-Verbundschicht. Mit dem Begriff MMC wird im vorliegenden Text stets die sich auf einem Substrat befindende Verbundschicht bezeichnet. Das Substrat selbst kann aus Aluminium, Aluminiumlegierungen oder Legierungen auf Al-Basis bestehen oder aber einen Verbundwerkstoff darstellen, dessen zu beschichtende Oberfläche aus einem der zuvor genannten Aluminium-haltigen Materialien besteht. Unter dem Begriff Aluminiumsubstrat werden im weiteren Verlauf dieser Beschreibung stets alle handelsüblichen Werkstoffe aus Reinaluminium oder Aluminiumlegierungen verstanden.

Oberflächenbeschichtete Aluminiumsubstrate, die mit einer harten und abriebfesten MMC-Schicht versehen sind, zeigen oft eine hohe Verschleissfestigkeit sowie gute Gleiteigenschaften und können überall dort eingesetzt werden, wo die Oberflächeneigenschaften wie beispielsweise Härte, Tragfähigkeit oder Warmfestigkeit vollflächig oder partiell verbessert werden müssen.

Metalloberflächen von bewegten Konstruktionsteilen, die beispielsweise mit einer anderen, üblicherweise metallischen Oberfläche in Gleitkontakt stehen, unterliegen allgemein grossen Verschleisserscheinungen und dies insbesondere bei Verwendung von Werkstoffen aus Aluminium. Deshalb benötigen solche Konstruktionsteile oft eine verschleissfeste Beschichtung. Der Verschleiss hängt weitgehend von den mechanischen Eigenschaften und dem Mikrogefüge der jeweiligen Materialien ab. Im allgemeinen werden an verschleissfeste Beschichtungen hohe Anforderungen gestellt, wie beispielsweise gute Haftung der Beschichtung auf dem Substrat, hohe Verträglichkeit der einzelnen Komponenten bezüglich ihrer thermomechanischen Eigenschaften (Wärmeausdehnung) und gute Wärmeleitung sowohl im Substrat wie auch in der Beschichtung und insbesondere auch am Übergang zwischen der Beschichtung und dem Substrat. Um eine hohe Lebensdauer solcher Werkstoffe zu gewährleisten, muss im allgemeinen zudem die Löslichkeit der Beschichtungsbestandteile im Substrat (Diffusion) möglichst klein, die Dicke der verschleissfesten Beschichtung möglichst gross (Abrieb) und die Härte der Beschichtung hoch sein (Reibung).

Aluminiumsubstrate, die mit einer MMC-Schicht versehen sind, verbinden Eigenschaften wie hohe Materialfestigkeit, Oberflächenhärte und Tragfähigkeit des entsprechenden MMC-Verbundes mit der Dehnbarkeit und Zähigkeit des Aluminiumsubstrates. Das resultierende günstige Verhältnis zwischen Steifigkeit und Gewicht machen solche Werkstoffe sehr interessant für deren Verwendung in gewichtskritischen Anwendungen, bei denen hohe Werkstoffeigenschaften gefordert werden, wie beispielsweise im Bereich der Luft- und Raumfahrt oder für hochbeschleunigte Komponenten im Fahrzeugbau sowie in der Maschinen- und Textilindustrie.

Es ist bekannt, dass Einlagerungen von Keramikstoffen in Aluminiumlegierungen, deren Eigenschaften bezüglich Elastizitätsmodul und Härte stark verbessern und die Werkstoffeigenschaften bezüglich Warm- und Ermüdungsfestigkeit wesentlich erhöhen. Die Einlagerung von Keramikstoffen in die Oberfläche von Aluminiumsubstraten kann durch Deposition einer Keramik-Metall-Pulvermischung auf die Substratoberfläche und nachfolgendes Aufschmelzen des Metallpulvers und eines Teils der Substratoberfläche geschehen.

Die EP-A-411322 beschreibt ein Verfahren zur Herstellung verschleissfester Oberflächen an Bauteilen aus einer Al-Si-Legierung, bei dem die Bauteiloberfläche mit einem Binder, pulverförmigem Silizium und einem Keimbildner für primäre Siliziumkristalle beschichtet und anschliessend diese Beschichtung mittels Laserenergie eingeschmolzen wird.

Die europäische Patentschrift EP 0 221 276 beschreibt ein Verfahren für die Herstellung von keramischen Verbundschichten auf Oberflächen von Aluminiumlegierungssubstraten mittels Deposition eines entsprechenden Pulvergemisches auf die Substratoberfläche und nachfolgendes Aufschmelzen des Pulvers und eines Teils der Substratoberfläche mittels Laserstrahlen, wobei sich durch Verschmelzung der Pulver- und Substratbestandteile eine Legierung bildet, die nach Abkühlung eine dünne keramische Verbundschicht entstehen lässt. Diese Methode zur Aufbringung von keramischen Verbundschichten wird im weiteren als sogenanntes Auftragsbeschichten bezeichnet. Das dabei verwendete Pulvergemisch enthält einerseits ein Pulver aus einem Carbid eines Metalles wie beispielsweise Titancarbid, Tantalcarbid, Wolframcarbid oder Molybdäncarbid und andererseits ein Metallpulver enthaltend Silizium und ein Metall, welches intermetallische Verbindungen mit Silizium bildet, wie beispielsweise Kupfer, Tantal, Wolfram oder Molybdän. Nachteile dieses Verfahrens bestehen einerseits in der Wahl der Komponenten des Pulvergemisches, welche durch ihre unterschiedlichen Ausdehnungskoeffizienten thermomechanische Spannungen in der Verbundschicht hervorrufen und andererseits in der Notwendigkeit des Zulegierens schwerer Elemente, um die hohe Dichte der Karbide zu kompensieren und somit eine Sedimentation der Karbide zu vermeiden.

In der Publikation "Laser Treatment Materials" (Pap. Eur. Conf.), 0berursel (DE), Ed. Bany L. Mordike, 1992, Seite 245-250 wird ein derartiges Auftragsbeschichtungsverfahren beschrieben. Dabei werden zur Erhöhung der Oberflächenhärte von AlSi-Legierungen Keramikpartikel wie SiC, TiC, $B_4C$, $ZrO_2$ auf die entsprechende Oberfläche deponiert und durch laserinduziertes Aufschmelzen der Oberflächenschicht in diese eingearbeitet, wobei die Oberflächenschicht etwa 3 mm tief aufgeschmolzen wird. Nach der Verfestigung des aufgeschmolzenen Oberflächenbereiches zeigen sich im wesentlichen zwei Bereiche: eine zentrale Zone aus einem Gemisch von Keramikpartikel und Substratmaterial sowie eine äussere Zone aus schnell abgeschrecktem AlSi. Da der Vermischungsprozess der Keramikpartikel mit dem Substratmaterial zeitlich auf den aufgeschmolzenen Zustand dieser Oberflächenschicht begrenzt ist, führt dieses Verfahren bezüglich der Verteilung der Keramikpartikel zu sehr inhomogenen Oberflächenschichten und demzufolge -- bedingt durch die unterschiedliche thermische Ausdehnung der verschiedenen Zonen -- zur Bildung von Mikrorissen in der Oberflächenschicht.

In der Publikation "Mémoires et etudes scientifiques de la revue de metallurgie", Bd. 89, Nr. 11, November 1992, Paris, Seiten 711-723 XP328376, K. Marcellou et al., 'Traitement superficiel par laser de l'aliage d'aluminium 2024 par injection de poudre de SiC: etude microstructurale et comportement en usure-frottement' wird ein Beschichtungsverfahren beschrieben, bei dem die Oberfläche laserinduziert aufgeschmolzen und SiC-Pulver mittels eines Trägergases in die Schmelzzone geleitet wird. Der starken Reflexion von Aluminiumoberflächen wegen, muss die zu bearbeitende Substratoberfläche vorgängig aufgerauht werden. Die Verteilung der SiC-Partikel wird im wesentlichen durch Konvektionsund Diffusionsvorgänge in der laserinduzierten Schmelzzone bestimmt und ist somit schwierig zu kontrollieren. Durch den verfahrensbedingten Temperaturgradienten in der Schmelzzone zeigen die erhaltenen MMC-Schichten eine Struktur mit drei bezüglich ihrer Zusammensetzung unterschiedlichen Schichten. Um die Homogenität wenigstens teilweise zu verbessern, müssen die so hergestellten Schichten während 15 bis 20 Minuten einer weiteren Temperaturbehandlung bei 480 bis 500°C unterzogen werden.

Ein ähnliches Verfahren zur Bildung von MMC-Schichten durch laserinduziertes Aufschmelzen der Substratoberfläche und simultanes Aufbringen von feinkörnigem SiC-Pulver mittels einem Trägergas wird in der Publikation "Key Engineering Materials", Bd. 46, 47, 1990 CH, Seiten 415-424, Riccardi et al., 'Laser assisted formation of a wear resistant SiC-metal composite on the surface of a structural aluminium alloy' beschrieben. Die verfahrensbedingte Schwierigkeit der hohen Reflexion von Aluminiumoberflächen wird dabei durch Deposition einer Graphitschicht überwunden. Zudem durchläuft das SiC-Pulver auf dem Weg von der Düse auf die Substratoberfläche den Laserstrahl und wird dadurch etwas aufgeheizt. Die Verteilung der SiC-Partikel in der Oberflächenschicht wird jedoch wiederum nur durch Konvektion und Diffusion bestimmt, wobei diese Vorgänge -- neben den Materialeigenschaften -- im wesentlichen durch den in der Schmelzzone gebildeten Temperaturgradienten beeinflusst werden.

Nebst der inhomogenen Verteilung der in die Substratoberfläche eingebrachten SiC-Partikel zeigen nach den obgenannten Verfahren hergestellte MMC-Schichten häufig nadelförmige SiC-Kristalle, welche zu inhomogenen Eigenschaften der MMC-Schicht führen.

Allgemein ergeben sich bei der laserinduzierten Aufschmelzung eines Keramikpartikel enthaltenden Pulvergemisches und dessen Legierung mit der Oberfläche von Aluminiumsubstraten folgende Schwierigkeiten:

-    Durch die relativ kurzzeitige laserinduzierte Aufschmelzung ergibt sich oft eine schlechte Durchmischung der Legierungsbestandteile, insbesondere wenn das Pulvergemisch aus mehreren Legierungselementen sehr unterschiedlichen Schmelzpunktes besteht.

-    Die Keramikpartikel zeigen vielfach eine schlechte Benetzbarkeit gegenüber den anderen Legierungsbestandteilen, was zu einer inhomogenen Partikelverteilung führen kann.

-    Bedingt durch das unterschiedliche spezifische Gewicht der Keramikpartikel und der anderen sich in der Schmelzzone befindlichen Legierungsbestandteile findet eine zeit- und temperaturabhängige Entmischung statt, was zu einer Anreicherung der Keramikpartikel am Boden, bzw. der Oberfläche der Schmelzzone führen kann.

-    Wenn die Keramikpartikel Metalloxide wie beispielsweise $Al_2O_3$, $SiO_2$ oder Metallnitride wie beispielsweise $Si_3N_4$, AlN enthalten, kann sich während des Legierungsvorganges ein Teil der Keramikpartikel in der Schmelzzone zersetzen. Dabei neigen Keramikpartikel, die Metalloxide enthalten, zur Zersetzung unter Bildung von Sauerstoff, und Keramikpartikel, die Metallnitride enthalten, zur Zersetzung unter Bildung von Stickstoff. Da diese Gase durch die kurzen Aufschmelzvorgänge keine Zeit zum Entweichen aus der Schmelze haben, bilden sich dann oft unerwünschte Gaseinschlüsse, die zusammen mit den zersetzten Keramikpartikeln zu inhomogenen und mechanisch wenig stabilen Verbundschichten führen.

-    Der für die laserinduzierte Aufschmelzung üblicherweise verwendete $CO_2$-Laser emittiert elektromagnetische Strahlung im infraroten Bereich mit einer typischen Wellenlänge der energiereichsten Strahlung von 10,6 µm. Da elektromagnetische Strahlung von dieser Wellenlänge von Aluminiumsubstraten nur sehr schwach absorbiert wird, ist das Auflegieren des Substrates auf diese Weise nur schwer durchführbar und führt üblicherweise zu geringen Schichtdicken der Verbundschichten. Beim Auftragsbeschichten geschieht der Aufheizprozess der Substratoberfläche vorwiegend durch Aufschmelzen des Pulvergemisches und nachfolgender Wärmeleitung auf die Substratoberfläche. Je nach Grösse und Temperatur der Schmelzzone kann die zeit- und temperaturabhängige Zersetzungsrate der Keramikpartikel entsprechend hoch werden; zudem wird damit die Legierungsqualität schlecht kontrollierbar.

Aufgabe vorliegender Erfindung ist die Bereitstellung eines Werkstoffes aus Aluminium oder Aluminiumlegierungen mit einer verschleissfesten, d.h. harten, abriebfesten sowie porenfreien, und tragenden MMC-Oberflächenschicht enthaltend eine betreffend Si-Anteil übereutektische AlSi-Matrix und SiC-Partikel, welche einen möglichst geringen Anteil an Aluminiumkarbid und homogene mechanische Eigenschaften aufweist und die genannten Nachteile der aus dem Stand der Technik bekannten MMC-Schichten vermeidet, wobei der tragfähige Charakter der MMC-Schicht dadurch zustande kommt, dass eine entsprechend grosse MMC-Schichtdicke lokal angreifende Kräfte auf eine grössere Fläche des Substrates verteilt (Herz'sche Pressung).

Eine weitere Aufgabe vorliegender Erfindung ist es, ein Verfahren für die reproduzierbare Herstellung von Werkstoffen aus Aluminium oder Aluminiumlegierungen mit einer verschleissfesten und tragenden MMC-Oberflächenschicht anzugeben, das die oben beschriebenen Schwierigkeiten bei den aus dem Stand der Technik bekannten MMC-Schichtherstellungsverfahren überwindet und zudem die Bildung von Aluminiumkarbid während der MMC-Schichtherstellung weitgehend vermeidet.

Erfindungsgemäss wird die auf den Werkstoff gerichtete Aufgabe dadurch gelöst, dass die MMC-Schicht zwischen 1 und 40 Gew.-% SiC als homogen verteilte SiC-Partikel einer Korngrösse zwischen 5 und 100 μm in einer betreffend Si-Anteil übereutektischen AlSi-Matrix mit einem Si-Anteil zwischen 20 und 50 Gew.-% und homogen verteilten Si-Primärkristallen aufweist, und die Schichtdicke der MMC-Schicht 200 μm bis 3 mm beträgt.

Der erfindungsgemässe Werkstoff basiert auf einem Aluminiumsubstrat mit einer verschleissfesten und tragenden MMC-Oberfläche, wobei das Substrat aus Aluminium oder einer Aluminiumlegierung besteht, dessen Reinheit resp. Zusammensetzung unkritisch ist. In der Praxis haben sich Aluminium einer Reinheit von beispielsweise 98,3 % und höher oder Legierungen auf Al-Basis mit und ohne Dispersionshärtung sowie Al-Verbundwerkstoffe bewährt. Bevorzugt werden Guss-, Walz-, Knet- und Schmiedelegierungen aus Aluminium.

Beispiele bevorzugter Substratmaterialien sind die Presslegierung CEN 7149, die Gusslegierung CEN 44400 und die Walzlegierung CEN 42100, deren Zusammensetzungen in Gew.-% der jeweiligen Elemente in Tabelle 1 angegeben sind.

Tabelle 1:

| Zusammensetzung bevorzugter Substratmaterialien in Gew.-% der jeweiligen Elemente. | | | | | | | | | | |
|---|---|---|---|---|---|---|---|---|---|---|
| | Al | Zn | Mg | Cu | Zr | Mn | Fe | Si | Cr | Ti |
| CEN 7149 | Bal. | 6.9 | 2.7 | 1.8 | 0.18 | 0.18 | 0.09 | 0.08 | 0.02 | 0.01 |
| CEN 44400 | Bal. | 0.1 | 0.1 | 0.03 | - | 0.3-0.4 | 0.4 | 7 | - | 0.05 |
| CEN 42100 | Bal. | 0.07 | 0.25-0.4 | 0.03 | - | 0.05 | 0.15 | 6.7-7.5 | - | 0.06-0.12 |

Die Substratmaterialien können beispielsweise durch Giessen, Fliesspressen, Strangpressen oder Walzen hergestellt sein.

Die MMC-Schicht des erfindungsgemässen Werkstoffes weist bevorzugt eine Schichtdicke von 1 bis 1,8 mm auf. Die Korngrösse der in der AlSi-Matrix eingeschlossenen Siliziumcarbid (SiC)-Partikel beträgt beispielsweise zwischen 5 μm und 100 μm. Die in der AlSi-Matrix enthaltenen Si-Primärkristalle weisen typischerweise eine Korngrösse zwischen 5 μm und 50 μm auf. Die AlSi-Matrix ist eine Legierung aus Aluminium (Al) und Silizium (Si), wobei deren Si-Anteil z.B. zwischen 20 Gew.-% und 50 Gew.-% liegt. Der Anteil der SiC-Keramikpartikel in der AlSi-Matrix liegt in der Regel im Bereich von 1 bis 40 Gew.-%.

Die Lebensdauer des Werkstoffes, d.h. die mögliche Verwendungsdauer des Werkstoffes, während der er dieselben physikalischen und chemischen Eigenschaften beibehält, hängt stark von der technischen Belastung des Werkstoffes ab. Um eine hohe Lebensdauer eines solchen Werkstoffes zu ermöglichen, muss die beim technischen Einsatz meist an der Werkstoffoberfläche entstehende Wärme schnell abgeführt werden. Beim erfindungsgemässen Werkstoff wird dies insbesondere durch eine hohe Wärmeleitfähigkeit, die sich aus der Kombination der Wärmeleitfähigkeiten der Al-reichen Matrix mit einer Wärmeleitfähigkeit zwischen 100 und 200 W/mK und der SiC-Partikel mit einer Wärmeleitfähigkeit zwischen 40 und 100 W/mK ergibt, erreicht.

Eine hohe Haftfestigkeit der MMC-Schicht auf dem Substrat, ist für die Lebensdauer des Werkstoffes von entscheidender Bedeutung. Ebenso wichtig ist jedoch im Hinblick auf die thermomechanische Belastung (Rissbildung) des Werkstoffs der thermische Längenausdehnungskoeffizient der MMC-Schicht, der je nach Schichtzusammensetzung zwischen $9*10^{-6}$ 1/K und $20*10^{-6}$ 1/K betragen kann.

Weitere für die Verschleissfestigkeit der erfindungsgemässen Werkstoffes wichtige Eigenschaften sind die Porosität der MMC-Schicht von beispielsweise weniger als 5 %. Der Anteil an Aluminiumcarbid ($Al_4C_3$) in der MMC-Schicht soll deshalb weniger als 1 Gew.-% betragen. $Al_4C_3$-Bestandteile können bezüglich Verschleiss die mechanischen Eigenschaften der MMC-Schicht verschlechtern und reagieren zudem empfindlich auf Feuchtigkeit, wobei Aluminiumhydroxid freigesetzt wird.

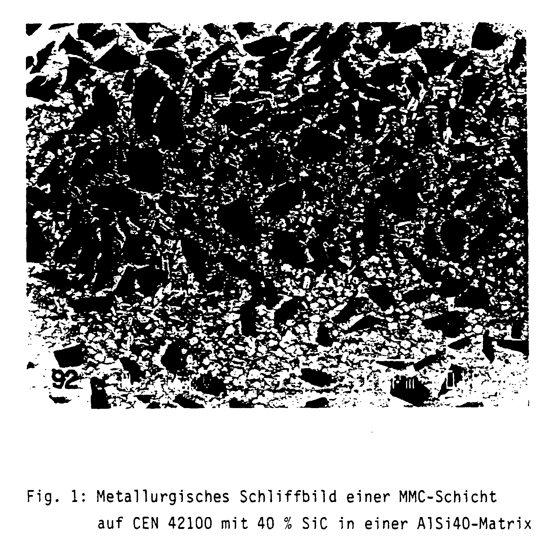

Die gute Homogenität einer erfindungsgemässen MMC-Schicht auf einem Substrat aus CEN 42100 kann beispielhaft der Figur 1 entnommen werden.

Figur 1 zeigt ein metallurgisches Schliffbild einer typischen MMC-Schicht, die 40 % SiC in einer AlSi40-Matrix enthält. Die Bezeichnung AlSi40 bedeutet eine AlSi-Matrix mit 40 Gew.-% Si. Im Schliffbild sind deutlich die schwarzen SiC-Partikel sowie die grauen Si-Kristalle in der AlSi-Matrix zu erkennen. Zudem können die Verhältnisse der Korngrössen der einzelnen Bestandteile der verschleissfesten Verbundschicht sowie deren räumliche Verteilung erkannt werden.

Der erfindungsgemässe Werkstoff kann aufgrund seiner hohen Verschleissfestigkeit und guten Gleiteigenschaften für hochbeanspruchte Teile im Fahrzeug- oder Maschinenbau, wie beispielsweise im Pumpenbau oder in fremd- oder selbstgezündeten Verbrennungsmotoren für Tasselstössel, Kolben, Ventilsitze oder in Schaltgetrieben für Schaltgabeln eingesetzt werden. Weitere wichtige Anwendungen des erfindungsgemässen Werkstoffes finden sich bei Konstruktionsteilen mit durch Reibung und Abrasion beaufschlagten Oberflächen, wie beispielsweise für Bremsbeläge von Scheiben- oder Trommelbremsen.

Der hohen Festigkeit und Steifigkeit bei gleichzeitig gegenüber anderen Werkstoffen geringem Gewicht wegen, findet der erfindungsgemässe Werkstoff zudem viele Anwendungsmöglichkeiten in gewichtskritischen Anwendungen wie beispielsweise in der Luft- und Raumfahrt oder für hoch beschleunigte Komponenten im Fahrzeugbau sowie in der Maschinen- und Textilindustrie.

Bezüglich des Verfahrens wird die gestellte Aufgabe erfindungsgemäss dadurch gelöst, dass die stoffliche Zusammensetzung des Pulvergemisches im wesentlichen der Zusammensetzung der gewünschten MMC-Schicht entspricht, und das Pulvergemisch auf seiner Flugbahn zwischen der Düsenöffnung und der Substratoberfläche zur Wärmeaufnahme einen Laserstrahl durchläuft, wobei der Laserstrahl auf die Auftreff-Fläche des Pulvergemisches auf der Substratoberfläche gerichtet ist, und das Pulvergemisch beim Durchlaufen des Laserstrahls sowie durch die von der auf der Substratoberfläche befindlichen Schmelzzone abgestrahlten Wärme so stark erhitzt wird, dass ein wesentlicher Anteil der für die Herstellung einer homogenen Legierung aus dem Pulvergemisch notwendigen Wärmemenge durch das auf die Substratoberfläche auftreffende Pulvergemisch herbeigeführt wird, und sich auf der Substratoberfläche eine im wesentlichen durch den Lasestrahl und den Strahl des Pulvergemisches begrenzte Schmelzzone bildet, die das Pulvergemisch sowie einen geringen Anteil aufgeschmolzenen Substratmaterials enthält. Der erfindungsgemässe Werkstoff kann demnach durch ein laserinduziertes Pulverbeschichtungsverfahren hergestellt werden. Die erfindungsgemässe Herstellung von MMC-Schichten geschieht durch Deposition eines Pulvergemisches mittels eines inerten Trägergases, wobei das das Pulvergemisch enthaltende Trägergas durch eine Düse strömt, welche auf die Substratoberfläche gerichtet ist, und das Pulvergemisch auf dem Weg zur Substratoberfläche einen Laserstrahl durchläuft.

Das für das erfindungsgemässe Verfahren verwendete Pulvergemisch enthält neben den SiC-Keramikpartikeln entweder Si- und vorlegierte AlSi-Pulverpartikel, oder Al- und Si-Pulverpartikel.

Bevorzugt werden im ersten Fall vorlegierte AlSil2-Partikel mit einer Korngrösse von 45 bis 105 μm. Bevorzugt wird Siliziumpulver einer typischen Korngrösse von 20 bis 100 μm. Bevorzugt wird weiter grobkörniges SiC mit einer Korngrösse zwischen 45 und 100 μm oder feinkörniges SiC mit Korngrössen von 5 bis 45 μm. Die Bezeichnung AlSi12 bedeutet eine AlSi-Matrix mit 12 Gew.-% Si. Die Mengenanteile der AlSi12 Partikel am gesamten Pulvergemisch betragen z.B. zwischen 28 und 90 Gew.-%, diejenigen des Si-Pulvers z.B. zwischen 5 und 43 Gew.-% und diejenigen der SiC-Partikel z.B. zwischen 1 und 50 Gew.-%.

Im zweiten Fall, d.h. bei Verwendung eines Pulvergemisches, das nebst SiC-Partikeln Al- und Si-Pulver enthält, wird Si-Pulver einer Korngrösse von 20 bis 45 μm bevorzugt. Bevorzugt wird SiC einer Korngrösse von 5 bis 100 μm. Bevorzugt wird weiter Al-Pulver einer Korngrösse von 5 bis 100 μm. Die zweckmässigen Mengenanteile des Al-Pulvers am gesamten Pulvergemisch betragen dabei zwischen 25 und 80 Gew.-%, diejenigen des Si-Pulvers zwischen 10 und 50 Gew.-% und diejenigen der SiC-Partikel zwischen 1 und 50 Gew.-%.

Das Pulvergemisch nimmt beim Durchlaufen des Laserstrahls sowie durch die von der auf der Substratoberfläche befindlichen Schmelzzone abgestrahlten Wärme soviel Energie auf, dass ein wesentlicher Anteil der für die Herstellung einer homogenen Legierung aus dem Pulvergemisch notwendigen Wärmemenge durch das auf die Substratoberfläche auftreffende Pulvergemisch herbeigeführt wird. Dabei ist der Laserstrahl derart auf die Substratoberfläche gerichtet, dass er im wesentlichen die Substratoberfläche ausleuchtet, auf der das Pulvergemisch auftrifft. Durch die direkt durch den Laserstrahl auf die Substratoberfläche übertragene Wärmeenergie sowie durch die vom Pulvergemisch übertragene Wärmeenergie wird ein Teil der Substratoberfläche aufgeschmolzen und es bildet sich eine im wesentlichen durch den Laserstrahl und den Strahl des Pulvergemisches begrenzte Schmelzzone, die das Pulvergemisch sowie einen geringen Anteil aufgeschmolzenen Substratmaterials enthält. Da wegen der kurz gewählten Prozesszeiten nur eine geringe Schichtdicke der Substratoberfläche aufgeschmolzen wird, wird die stoffliche Zusammensetzung der Schmelzzone vorwiegend durch die Zusammensetzung des Pulvergemisches bestimmt. Eine flächenhafte Bildung einer MMC-Schicht erfolgt beispielsweise durch eine vorgegebene Relativbewegung zwischen dem zu beschichtenden Substrat und der Auftrefffläche des Pulvergemisches bzw. des Laserstrahls. Diese Relativbewegung kann entweder durch partielles oder vollflächiges Überstreichen der Substratoberfläche mit dem Laser- und Pulvergemischstrahl und/oder durch gezieltes Verschieben des Substrates gegenüber einem örtlich und zeitlich konstant bleibenden Laser- und Pulvergemischstrahl erreicht werden. Dabei bildet sich an jedem Ort der Substratoberfläche eine zeit- und ortsabhängige lokale Schmelzzone, in der die gewünschte MMC-Legierung gebildet wird.

Ein Hauptproblem bei der MMC-Herstellung mittels einer flüssigen Phase, wie sie die Schmelzzone darstellt, besteht in der Benetzbarkeit und der Reaktivität der Keramikpartikel oder Keramikfasern mit dem geschmolzenen Metall. Oft scheitert die Herstellung von SiC enthaltenden MMC-Schichten an der schlechten Benetzbarkeit von SiC-Keramikpartikeln mit der Legierungsschmelze. Die Benetzbarkeit kann durch Zufügen von gewissen Legierungselementen wie beispielsweise Magnesium und Anwendung hoher Prozesstemperaturen verbessert werden.

Eine weitere Schwierigkeit besteht in der Reaktivität von SiC, das thermodynamisch gegenüber einer Aluminiumschmelze nicht stabil ist und folgende chemische Reaktion eingehen kann:

$$(1) \qquad Al + SiC \rightarrow Al_4\,C_3 + Si$$

Das entstehende $Al_4C_3$ verschlechtert die mechanischen Eigenschaften des MMC. Zudem reagiert das Aluminiumcarbid empfindlich auf Feuchtigkeit, wobei Aluminiumhydroxid freigesetzt wird. Die temperaturabhängige Bildung von Aluminiumcarbid kann durch Zulegieren von Si zu Al vermindert werden.

Um die Bildung von $Al_4C_3$ während des Legierungsprozesses möglichst niedrig zu halten, wurde gefunden, dass vorteilhaft mit einem hypereutektischen Si-Anteil gearbeitet wird, der grösser als 12 Gew.-% und bevorzugt grösser als 20 Gew.-% ist.

Die Si-Primärkristalle bleiben aufgrund der schnellen Erstarrung beim Laserprozess im Grössenbereich von z.B. kleiner als 50 µm.

Die Reaktivität und die Benetzbarkeit sind zwei gekoppelte Probleme und hängen stark von der Reaktionsdauer zwischen den Keramikpartikeln mit der Aluminiumlegierungsschmelze, der Temperatur und der Legierungszusammensetzung ab. In diesem betrachteten System begünstigen hohe Temperaturen von über 1600 °C die Benetzbarkeit. Die Bildung von $Al_4C_3$ gemäss Gleichung (1) an der Grenzfläche SiC-Al wird durch den hohen Si-Gehalt der Schmelze unterdrückt.

Für die Herstellung von SiC enthaltenden MMC-Schichten auf Aluminiumsubstraten ist der Einsatz eines Lasers ideal, da für eine kurze Zeitdauer sehr hohe Temperaturen in der Metallschmelze erreicht werden können. Infolge der sehr schnellen Aufheizung des Legierungspulvers und der begrenzten Ausdehnung des Schmelzbades einerseits sowie infolge der gegenüber dem Schmelzbad grossen Wärmekapazität des Substrates andererseits, wird die Schmelze schnell abgekühlt, sodass die Zeitdauer des aufgeschmolzenen Zustandes sehr kurz wird, d.h. in der Grössenordnung von 0,05 s bis 0,5 s. Durch die schnelle Abkühlung der Schmelzzone entspricht die Zeitdauer des aufgeschmolzenen Zustandes im wesentlichen der Wechselwirkungszeit des Laserstrahls mit der Substratoberfläche.

Um die geforderte Leistungsdichte für den Aufheizprozess zu erreichen, können als Energiequellen insbesondere Festkörper- oder Moleküllaser verwendet werden. Besonders geeignet sind Festkörperlaser, wie die Neodym: YAG-Laser oder Moleküllaser, wie beispielsweise der $CO_2$-Laser.

Der für die Materialbearbeitung wichtigste Moleküllaser ist der $CO_2$-Laser, der über 100 Wellenlängen im Bereich 9,14 µm bis 11,01 µm mit einer Maximalintensität bei 10,6 µm aufweist. Er zeichnet sich durch einen hohen Wirkungsgrad und eine hohe Ausgangsleistung im kontinuierlichen Betrieb ab. Der in der Praxis erreichbare Wirkungsgrad $\eta$ liegt in der Grössenordnung von $\eta \simeq 0,3$. Je nach Laserkonstruktion erreicht man Strahlungsleistungen im kontinuierlichen Betrieb von typischerweise bis zu 25 kW.

Bei Verwendung eines $CO_2$-Lasers im erfindungsgemässen Verfahren hängt die Leistungsdichte von der Optimierung der übrigen Prozessparameter ab. Bei Wechselwirkungszeiten, definiert durch das Verhältnis von Strahldurchmesser zu Rastergeschwindigkeit, liegt die Leistungsdichte zweckmässigerweise zwischen 100 und 1500 W/$mm^2$, und bevorzugt zwischen 300 und 700 W/$mm^2$.

Der für technische Anwendungen wichtigste Festkörperlaser ist der Nd (Neodym): YAG-Laser. YAG ist die Abkürzung für Yttrium-Aluminium-Granat ($Y_3Al_5O_{12}$). Der leistungsstärkste Laserübergang eines Nd: YAG-Lasers liegt bei der Wellenlänge $\lambda = 1,064$ µm. Ein wesentlicher Vorteil von Nd: YAG-Lasern gegenüber $CO_2$-Lasern liegt in der durch die kürzere Lichtwellenlänge bedingten Möglichkeit der Strahlführung des YAG-Lasers mittels Glasfasern sowie in der verbesserten Absorption bei der Behandlung von Aluminiumsubstraten.

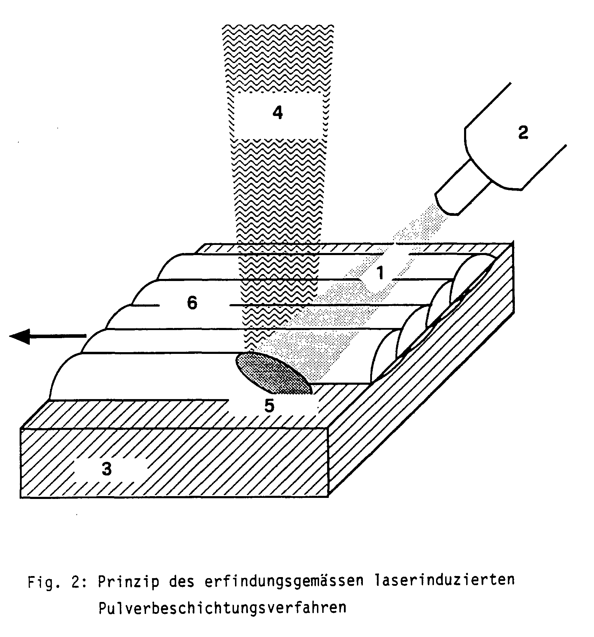

Das Prinzip des erfindungsgemässen laserinduzierten Pulverbeschichtungsverfahrens für die Herstellung von SiC enthaltenden MMC-Schichten (6) auf Aluminiumsubstraten (3) ist beispielhaft in Figur 2 dargestellt. Das Aufbringen des Pulvergemisches (1), welches ein Pulver einer vorlegierten Al-Si-Legierung, ein Si-Pulver und SiC-Partikel enthält, geschieht mittels einer Gasströmung eines inerten Gases, wie beispielsweise Helium (He), Argon (Ar), Stickstoff ($N_2$) oder Kohlendioxid ($CO_2$), welches das Pulvergemisch durch eine Düse (2) bewegt und auf die Oberfläche des Substrates (3) leitet. Ein Teil der Flugbahn des Pulvergemisches durchläuft den Laserstrahl (4), in dem das Pulvergemisch, insbesondere die SiC-Partikel, viel Wärme aufnehmen und diese teilweise beim Auftreffen auf die Substratoberfläche an das Substrat (3) abgeben. Der Laserstrahl (4) ist in der Weise angeordnet, dass er einerseits ein Teil der Flugbahn des Pulvergemisches durchläuft und andererseits die Auftrefffläche des Pulvergemisches (5) auf der Substratoberfläche aufheizt.

Da das Pulvergemisch auf seiner Flugbahn von der Düse auf die Substratoberfläche von der Gasströmung eines inerten Gases bewegt wird, verhindert dieses die Oxidation der Pulverpartikel während deren Aufheizung im Laserstrahl und schafft zudem eine inerte Atmosphäre an der Auftrefffläche des Pulvergemisches auf der Substratoberfläche, und schützt damit auch die Schmelzzone an der Substratoberfläche gegen Oxidation.

Durch die kurzen Prozesszeiten ist der Verlust von Legierungselementen durch Verdampfen vernachlässigbar. Die Depositionsparameter werden zudem in der Weise gewählt, dass die Substratoberfläche nur bis zu einer Tiefe von einigen Mikrometern, d.h. zwischen z.B. 10 und 150 μm, und insbesondere weniger als 60 μm, aufgeschmolzen wird, so dass die stoffliche Zusammensetzung der MMC-Schicht im wesentlichen der des Pulvergemisches entspricht. Dieses Verfahren erlaubt die Herstellung von MMC-Schichten mit einer sehr geringen Porosität von kleiner als 5 % und einer ausgezeichneten Haftfestigkeit mit dem Substrat.

Für das laserinduzierte Pulverbeschichtungsverfahren kann anstelle von vorlegiertem AlSi-Pulver auch Aluminium- und Siliziumpulver in der gewünschten Zusammensetzung verwendet werden.

Eine möglichst hohe Legierungstemperatur gewährleistet eine geringe Viskosität der Schmelze und damit deren optimale Durchmischung infolge der Maranghoni-Konvektion, was zu einer hohen Homogenität der resultierenden MMC-Schicht führt.

Im Rahmen der erfinderischen Tätigkeit wurde auch gefunden, dass die Wärmeaufnahme der Pulverbestandteile zu einem wesentlichen Anteil auf ihrem Weg durch den Laserstrahl während ihrer Flugbahn von der Düse auf die Substratoberfläche geschieht und neben der Leistung des Laserstrahls wesentlich von den Absorptionseigenschaften und der Verweildauer der Partikel im Laserstrahl sowie von deren Masse, Wärmekapazität und ihrem mittleren Durchmesser abhängt. Eine vereinfachte mathematische Beschreibung der mittleren Temperaturänderung eines Pulverpartikels auf seiner Flugbahn durch den Laserstrahl kann durch Gleichung (2) erfolgen. In dieser Beschreibung wird eine mögliche Phasenänderung des Partikels während seiner Wärmeaufnahme, wie beispielsweise ein Phasenübergang von der festen in die flüssige Phase, nicht berücksichtigt.

$$(2) \qquad \Delta T = [A \bullet p \bullet t_p \bullet \Pi \bullet R_p{}^2] \bullet \left[ \frac{1}{m \bullet C_p} \right]$$

A:  Absorptionkoeffizient
p:  Leistungsdichte des Lasers [W/m²]
$t_p$:  Verweildauer des Partikels im Laserstrahl [s]
$R_p$:  Mittlerer Radius der Partikel [m]
m:  Masse des Partikels
$C_p$:  Wärmekapazität des Partikels

Unter der Annahme einer typischen Verweilzeit der Partikel im Laserstrahl von $t_p = 6 \cdot 10^{-4}$s und einer Leistungsdichte eines $CO_2$-Lasers von $p = 4,55 \cdot 10^8$W/m² wurden mittels Gleichung (2) die mittleren Temperaturänderungen der für die im erfindungsgemässen Verfahren verwendeten Pulverpartikel berechnet. Die Resultate dieser Berechnungen und die dabei verwendeten partikelspezifischen Stoffwerte wie Absorptionskoeffizient, mittlerer Partikeldurchmesser, Wärmekapazität und Dichte sind in Tabelle 2 dargestellt.

Tabelle 2:

| Approximative, berechnete Temperaturerhöhung $\Delta T$ der für die im erfindungsgemässen Verfahren verwendeten Pulverpartikel während ihrer Wärmeaufnahme im Laserstrahl, wobei eine Leistungsdichte des $CO_2$-Lasers von p = $4,55 \cdot 10^8 W/m^2$ und eine Verweilzeit der Partikel im Laserstrahl von tp = $6 \cdot 10^{-4}$ s angenommen wurden. | | | | |
|---|---|---|---|---|
| | Einheiten | AlSil2 | Si | SiC |
| A | [-] | 0.1 | 0.2 | 0.5 |
| Rp | [m] | 25e-6 | 25e-6 | 25e-6 |
| Cp | [J/kg•K] | 900 | 700 | 670 |
| $\rho$ | [kg/m3] | 2.65e3 | 2.33e3 | 3.15e3 |
| $\Delta T$ | [K] | 336 | 983 | 1900 |

Aus der Tabelle 2 ist zu ersehen, dass von den materialspezifischen Grössen der Absorptionskoeffizient A den grössten Einfluss auf die Wärmeaufnahme der Partikel ausübt. Die Bestimmung des Absorptionskoeffizienten A ist von mehreren Parametern wie beispielsweise der Temperatur T und dem Zustand der Partikeloberfläche (Rauhigkeit, Oxidationsschicht) abhängig. Bei den in Tabelle 2 angeführten Absorptionskoeffizienten A handelt es sich um Näherungswerte, und diese geben einen Hinweis über die Grössenordnung ihres Einflusses auf die Wärmeaufnahme der einzelnen Partikel.

Aufgrund von pyrometrischen Temperaturmessungen-liegt die Oberflächentemperatur der Schmelze während der Deposition des Pulvergemisches aus AlSi12, Si und SiC z.B. im Bereich zwischen 1800°C und 2100°C; bei Deposition des entsprechenden Pulvergemisches ohne SiC liegt hingegen die Temperatur in der Schmelzzone nur im Bereich von z.B. 1300°C und 1500°C. Dieser Sachverhalt zeigt den bestimmenden Einfluss der SiC-Partikel auf die Temperatur der Schmelzzone. Durch die hohe Auftreff-Geschwindigkeit der SiC-Partikel von typischerweise 1 bis 4 m/s auf die Oberfläche der Schmelzzone, werden diese infolge ihrer hohen kinetischen Energie, mit welcher sie die Oberflächenspannung der Schmelze problemlos überwinden können, sofort in der Schmelzzone absorbiert. Dank der guten Wärmeleitung zwischen den SiC-Partikeln und der AlSi-Schmelze können die Keramikpartikel ihre Wärmeenergie leicht an die Schmelze abgeben.

Obwohl für das erfindungsgemässe Verfahren möglichst hohe Temperaturen in der Schmelzzone erwünscht sind, liegt die maximal mögliche Schmelzentemperatur bei 2400 °C und wird durch den Dampfdruck von Aluminium und die Zersetzung von SiC begrenzt.

Wie aus Tabelle 2 zu entnehmen ist, zeigen die für das erfindungsgemässe Verfahren verwendeten Bestandteile ähnliche Werte der Dichte $\rho$ und stellen damit sicher, dass in der Schmelzphase keine Entmischung der einzelnen Bestandteile erfolgt.

Wie oben dargelegt begünstigen die SiC-Partikel durch ihre hohe Wärmeaufnahme den metallurgischen Beschichtungsprozess. Die Verwendung von SiC ermöglicht zudem die Herstellung von laserinduzierten MMC-Schichten mit relativ geringen thermomechanischen Restspannungen, denn die SiC-Partikel besitzen einen deutlich geringeren thermischen Ausdehnungskoeffizienten als die AlSi-Matrix. Thermomechanische Restspannungen entstehen bei der Abkühlung aufgrund des unterschiedlichen Ausdehnungsverhaltens von Schicht und Substrat sowie aufgrund des Temperaturgradienten zwischen der Schmelzzone und dem Substrat. Ausserdem beeinflussen die Verfahrensparameter des Beschichtungsprozesses die Bildung von thermomechanischen Restspannungen. Durch die im Vergleich zur grossen Wärmekapazität des Substrates kleinflächige Schmelzzone und des während des Prozesses grossen Temperaturgradienten geschieht die Abkühlung der Schmelze sehr schnell, so dass sich die thermomechanischen Restspannungen während dem Beschichtungsprozess nicht abbauen können. Solche im Werkstoff verbleibenden oder eingefrorenen mechanischen Restspannungen können zu Rissbildung in der Schicht und zu Ermüdungserscheinungen des Werkstoffes führen und vermindern so gegebenenfalls seine Lebensdauer.

Die mechanischen Eigenschaften der MMC-Schicht wie Elastizitätsmodul, Härte oder Warm- und Ermüdungsfestigkeit können durch geringe Mengen von Legierungszusätzen, wie beispielsweise Titan, Mangan, Eisen, Kobalt, Nickel, Kupfer, Magnesium oder Zink verbessert werden. In einem gewissen Bereich lassen sich durch Legierungszusätze mit kleinem thermischen Ausdehnungskoeffizienten die thermomechanischen Restspannungen in der MMC-Schicht reduzieren. Typische Mengen von Legierungszusätzen zur Verbesserung der mechanischen Eigenschaften und gegebenenfalls der Weiterverarbeitbarkeit können, bezogen auf die Legierungszusammensetzung bei Cu 0,1 - 5 Gew.-%, bei Zn 0,1 - 7 Gew.-%, bei Mg 0,1 - 6 Gew.-%, bei Ti 0,1 - 1 Gew.-% und bei Fe und Ni 0,1 - 1,5 Gew.-% betragen.

Wie der Tabelle 3 zu entnehmen ist, weisen Si und SiC gegenüber Aluminium kleine thermische Ausdehnungskoeffizienten auf. Zudem zeigen die Werte der Ausdehnungskoeffizienten für AlSi40 + 20% SiC und AlSi40 + 40% SiC, dass durch Zugabe von Si oder SiC zur Legierung die thermische Ausdehnung der MMC-Schicht insgesamt

verkleinert wird.

Tabelle 3:

Mittlere thermische Ausdehnungskoeffizienten für im erfindungsgemässen Verfahren
verwendete Stoffe.

| | thermische Aus-dehnungskoeffiz. [-] |
|---|---|
| Al | 23e-6 |
| Si | 7.6e-6 |
| SiC | 2.4e-6 |
| AlSi40 + 20% SiC | 14.2e-6 * |
| AlSi40 + 40% SiC | 11.5e-6 * |

*) berechnet nach der Mischungsregel

Die laserinduzierte Herstellung von SiC enthaltenden MMC-Schichten nach dem erfindungsgemässen Verfahren erlaubt sehr hohe Legierungstemperaturen und begünstigt die Benetzbarkeit der SiC-Partikel in der Schmelze.

Die durch das erfindungsgemässe Verfahren ermöglichten kurzen Legierungszeiten wie auch die gefundenen optimalen Legierungszusammensetzungen verhindern die Bildung von unerwünschtem $Al_4C_3$ und ermöglichen die Herstellung von homogenen, porenfreien MMC-Schichten bei metallurgisch idealen Prozessparametern.

Die gute Wärmekopplung zwischen dem Laserstrahl und den SiC-Partikeln ermöglicht zudem die Herstellung von MMC-Schichten mit grosser tragender Schichtdicke. Die Zugabe der keramischen SiC-Partikel in die MMC-Legierung verkleinert zudem den thermischen Ausdehnungskoeffizienten der resultierenden MMC-Schicht und vermindert damit die Gefahr der Rissbildung infolge thermomechanischer Spannungen.

**Patentansprüche**

1.  Werkstoff aus Aluminium oder Aluminiumlegierungen mit einer verschleissfesten und tragenden MMC-Oberflächenschicht enthaltend eine betreffend Si-Anteil übereutektische AlSi-Matrix und SiC-Partikel,
    dadurch gekennzeichnet, dass
    die MMC-Schicht zwischen 1 und 40 Gew.-% SiC als homogen verteilte SiC-Partikel einer Korngrösse zwischen 5 und 100 μm in einer betreffend Si-Anteil übereutektischen AlSi-Matrix mit einem Si-Anteil zwischen 20 und 50 Gew.-% und homogen verteilten Si-Primärkristallen aufweist, und die Schichtdicke der MMC-Schicht 200 μm bis 3 mm beträgt.

2.  Werkstoff nach Anspruch 1, dadurch gekennzeichnet, dass die Si-Kristalle in der AlSi-Matrix eine Korngrösse von 5 μm bis 50 μm aufweisen.

3.  Werkstoff nach Anspruch 1, dadurch gekennzeichnet, dass in der MMC-Schicht weniger als 1 Gew.-% $Al_4C_3$ enthalten ist.

4.  Verwendung des Werkstoffes nach den Ansprüchen 1 bis 3 für verschleisskritische oder gewichtskritische Anwendungen, bei denen zudem eine hohe Festigkeit des Werkstoffes gefordert wird.

5.  Verfahren zur laserinduzierten Herstellung einer verschleissfesten und tragenden MMC-Schicht auf Substraten aus Aluminium oder Aluminiumlegierungen durch Zuführung eines Pulvergemisches, enthaltend Si-Pulver, SiC-Partikel und vorlegiertes AlSi-Pulver, oder eines Pulvergemisches, enthaltend Si- und Al-Pulver und SiC-Partikel, mittels einer Strömung eines inerten Trägergases durch eine Düse, welche auf die Substratoberfläche gerichtet ist, wobei eine flächenhafte Bildung der MMC-Schicht durch eine vorgegebene Relativbewegung zwischen dem zu beschichtenden Substrat und der Auftreff-Fläche des Pulvergemisches bzw. des Laserstrahls geschieht, dadurch gekennzeichnet, dass

die stoffliche Zusammensetzung des Pulvergemisches im wesentlichen der Zusammensetzung der gewünschten MMC-Schicht entspricht, und das Pulvergemisch auf seiner Flugbahn zwischen der Düsenöffnung und der Substratoberfläche zur Wärmeaufnahme einen Laserstrahl durchläuft, wobei der Laserstrahl auf die Auftreff-Fläche des Pulvergemisches auf der Substratoberfläche gerichtet ist, und das Pulvergemisch beim Durchlaufen des Laserstrahls sowie durch die von der auf der Substratoberfläche befindlichen Schmelzzone abgestrahlten Wärme so stark erhitzt wird, dass ein wesentlicher Anteil der für die Herstellung einer homogenen Legierung aus dem Pulvergemisch notwendigen Wärmemenge durch das auf die Substratoberfläche auftreffende Pulvergemisch herbeigeführt wird, und sich auf der Substratoberfläche eine im wesentlichen durch den Lasestrahl und den Strahl des Pulvergemisches begrenzte Schmelzzone bildet, die das Pulvergemisch sowie einen geringen Anteil aufgeschmolzenen Substratmaterials enthält.

6. Verfahren nach Anspruch 5, dadurch gekennzeichnet, dass die Zusammensetzung des Pulvergemisches zwischen 28 und 90 Gew.-% vorlegiertes AlSi12, zwischen 5 und 43 Gew.-% Si, sowie zwischen 1 und 50 Gew.-% SiC enthält.

7. Verfahren nach Anspruch 5, dadurch gekennzeichnet, dass die Zusammensetzung des Pulvergemisches zwischen 25 und 80 Gew.-% Al, zwischen 10 und 50 Gew.-% Si, sowie zwischen 1 und 50 Gew.-% SiC enthält.

8. Verfahren nach Anspruch 5, dadurch gekennzeichnet, dass die Temperatur der Schmelzzone während dem Legierungsprozess zwischen 1300°C und 2100°C liegt.

9. Verfahren nach Anspruch 5, dadurch gekennzeichnet, dass die Substratoberfläche während des Legierungsprozesses bis in eine Tiefe zwischen 10 bis 150 μm, vorzugsweise weniger als 60 μm tief, aufgeschmolzen wird.

10. Verfahren nach Anspruch 5, dadurch gekennzeichnet, dass die Partikel des Pulvergemisches mit einer Geschwindigkeit von 1 bis 4 m/s auf der Substratoberfläche auftreffen.

11. Verfahren nach Anspruch 5, dadurch gekennzeichnet, dass die Zeitdauer des flüssigen Legierungszustandes lokal weniger als 0,5 s beträgt.

12. Verfahren nach Anspruch 5, dadurch gekennzeichnet, dass zum Pulvergemisch Legierungszusätze, vorzugsweise Ti, Mn, Fe, Co, Ni, Cu, Mg oder Zn beigegeben werden.

13. Verwendung des Verfahrens nach Anspruch 5 zur Herstellung von verschleissfesten und tragenden MMC-Schichten mit einer Dicke von 200 μm bis 3 mm auf Substraten aus Aluminium oder Aluminiumlegierungen.

**Claims**

1. Material consisting of aluminium or aluminium alloys with a wear-resistant, load-bearing MMC surface layer containing an AlSi matrix which is hypereutectic with respect to the Si content and SiC particles, characterised in that the MMC layer comprises between 1 and 40 % by weight SiC in the form of homogeneously distributed SiC particles having a particle size of between 5 and 100 μm in an AlSi matrix which is hypereutectic with respect to the Si content having an Si content of between 20 and 50 % by weight and homogeneously distributed primary Si crystals, and the layer thickness of the MMC layer is 200 μm to 3 mm.

2. Material according to claim 1, characterised in that the Si crystals in the AlSi matrix have a particle size of 5 μm to 50 μm.

3. Material according to claim 1, characterised in that the MMC layer contains less than 1 % by weight $Al_4C_3$.

4. Use of the material according to claims 1 to 3 for applications in which wear or weight is critical and in which, in addition, the material must display high strength.

5. Process for the laser-induced production of a wear-resistant, load-bearing MMC layer on substrates consisting of aluminium or aluminium alloys by feeding a powder mixture containing Si powder, SiC particles and pre-alloyed AlSi powder or a powder mixture containing Si powder and Al powder and SiC particles by means of an inert carrier gas flow through a nozzle directed on to the substrate surface, a flat MMC layer being formed as a result of predetermined relative movement between the substrate to be coated and the impact face of the powder mixture or the laser beam, characterised in that the material composition of the powder mixture corresponds essentially to the composition of the desired MMC layer and the powder mixture passes through a laser beam on its flight path between the nozzle opening and the substrate surface for the absorption of heat, the laser beam being directed on to the impact face of the powder mixture on the substrate surface and the powder mixture being heated so intensely as it passes through the laser beam and as a result of the heat radiated by the melting zone situated on the substrate surface that a substantial proportion of the quantity of heat required for the production of a homogeneous alloy from the powder mixture is produced by the powder mixture striking the substrate surface and a melting zone delimited essentially by the laser beam and the jet of powder mixture is formed on the substrate surface, containing the powder mixture and a small quantity of molten substrate material.

6. Process according to claim 5, characterised in that the composition of the powder mixture contains between 28 and 90 % by weight pre-alloyed AlSi12, between 5 and 43 % by weight Si and between 1 and 50 % by weight SiC.

7. Process according to claim 5, characterised in that the composition of the powder mixture contains between 25 and 80 % by weight Al, between 10 and 50 % by weight Si and between 1 and 50 % by weight SiC.

8. Process according to claim 5, characterised in that the temperature of the melting zone during the alloying process is between 1300°C and 2100°C.

9. Process according to claim 5, characterised in that the substrate surface is melted to a depth of between 10 and 150 $\mu$m, preferably less than 60 $\mu$m, during the alloying process.

10. Process according to claim 5, characterised in that the particles of the powder mixture strike the substrate surface at a velocity of 1 to 4 m/s.

11. Process according to claim 5, characterised in that the liquid alloying state lasts locally less than 0.5 s.

12. Process according to claim 5, characterised in that alloying additives, preferably Ti, Mn, Fe, Co, Ni, Cu, Mg or Zn are added to the powder mixture.

13. Use of the process according to claim 5 for the production of wear-resistant, load-bearing MMC layers having a thickness of 200 $\mu$m to 3 mm on substrates consisting of aluminium or aluminium alloys.

**Revendications**

1. Matériau à base d'aluminium ou d'alliage d'aluminium, qui comporte une couche de surface en MMC porteuse et résistant à l'usure, laquelle contient une matrice AlSi sur-eutectique pour ce qui concerne la part de Si et des particules de SiC,
caractérisé en ce que la couche en MMC contient entre 1 et 40% en poids de SiC sous forme de particules de SiC réparties de manière homogène avec une taille de grains entre 5 et 100 microns dans une matrice de AlSi sur-eutectique pour ce qui concerne la part de Si, avec une part de Si entre 20 et 50% en poids, et des cristaux primaires de Si répartis de manière homogène, et en ce que l'épaisseur de la couche MMC est comprise entre 200 microns et 3 mm.

2. Matériau selon la revendication 1, caractérisé en ce que les cristaux de Si dans la matrice AlSi ont une taille de particules de 5 à 50 microns.

3. Matériau selon la revendication 1, caractérisé en ce que moins de 1 % en poids de A14C3 est contenu dans la couche en MMC.

4. Utilisation du matériau selon les revendications 1 à 3 pour des applications critiques vis-à-vis de l'usure ou critiques vis-à-vis du poids, dans lesquelles on exige en outre du matériau une haute solidité.

5. Procédé pour la fabrication, induite par laser, d'une couche résistant à l'usure et porteuse en MMC sur des substrats en aluminium ou en alliage d'aluminium, par alimentation d'un mélange de poudre qui contient de la poudre de Si, des particules de SiC et de la poudre de AlSi préalliée, ou bien d'un mélange de poudre qui contient de la poudre de Si, de la poudre de Al et des particules de SiC, au moyen d'un courant de gaz porteur inerte à travers une buse dirigée vers la surface du substrat, dans lequel se produit une formation en surface de la couche en MMC par déplacement relatif prédéterminé entre le substrat à revêtir et la surface d'incidence du mélange de poudre ou du rayon laser,

caractérisé en ce que la composition en matériau du mélange de poudre correspond essentiellement à la composition de la couche en MMC désirée, et le mélange de poudre traverse un faisceau laser sur sa trajectoire entre l'ouverture de buse et la surface du substrat, afin de recevoir de la chaleur, le faisceau laser étant dirigé vers la surface d'incidence du mélange de poudre sur la surface du substrat, et le mélange de poudre est si fortement réchauffé à la traversée du faisceau laser ainsi que par la chaleur rayonnée par la zone de fusion qui se trouve sur la surface du substrat, qu'une proportion essentielle de la quantité de chaleur nécessaire pour produire un alliage homogène à partir du mélange de poudre est apportée par le mélange de poudre qui tombe sur la surface du substrat, et il se forme sur la surface du substrat une zone en fusion essentiellement délimitée par le faisceau laser et par le jet de mélange de poudre, qui contient le mélange de poudre ainsi qu'une faible proportion de matériau du substrat fondu.

6. Procédé selon la revendication 5, caractérisé en ce que la composition du mélange de poudre contient entre 28 et 90 % en poids de AlSil2 préallié, entre 5 et 43 % en poids de Si, ainsi qu'entre 1 et 50% en poids de SiC.

7. Procédé selon la revendication 5, caractérisé en ce que la composition du mélange de poudre contient entre 25 et 80 % en poids de Al, entre 10 et 50 % en poids de Si, ainsi qu'entre 1 et 50% en poids de SiC.

8. Procédé selon la revendication 5, caractérisé en ce que la température de la zone en fusion pendant le processus d'alliage est située entre 1.300 et 2.100°C.

9. Procédé selon la revendication5, caractérisé en ce que la surface du substrat pendant le processus d'alliage est fondue jusqu'à une profondeur entre 10 et 150 microns, de préférence moins de 60 microns.

10. Procédé selon la revendication 5, caractérisé en ce que les particules du mélange de poudre tombent sur la surface du substrat avec une vitesse de 1 à 4 m/s.

11. Procédé selon la revendication 5, caractérisé en ce que la durée temporelle de l'état d'alliage liquide est localement inférieure à 0,5 s.

12. Procédé selon la revendication 5, caractérisé en ce que l'on ajoute des additifs d'alliage au mélange de poudre, de préférence Ti, Mn, Fe, Co, Ni, Cu, Mg, ou Zn.

13. Utilisation du procédé selon la revendication 5, pour la production de couches en MMC résistant à l'usure et porteuses avec une épaisseur de 200 microns à 3 mm sur des substrats en aluminium ou en alliage d'aluminium.

Fig. 1: Metallurgisches Schliffbild einer MMC-Schicht
auf CEN 42100 mit 40 % SiC in einer AlSi40-Matrix

Fig. 2: Prinzip des erfindungsgemässen laserinduzierten
Pulverbeschichtungsverfahren